# EUROPEAN PATENT SPECIFICATION

(11) **EP 0 824 202 B1**
(45) Date of publication and mention of the grant of the patent: **16.10.2002**
(21) Application number: 97306096.5
(22) Date of filing: 11.08.1997
(51) Int. Cl.: F16D 1/08, F16D 1/033

(54) **A method for coupling and a device**
Kupplungsmethode und Kupplungsvorrichtung
Méthode et dispositif d'accouplement

(30) Priority: 13.08.1996 FI 963172
(43) Date of publication of application: 18.02.1998
(73) Proprietor: Wärtsilä NSD OY AB, 00530 Helsinki (FI)
(72) Inventor: Gullberg, Lars, 65320 Vasa (FI)
(74) Representative: Newby, Martin John

(56) References cited:
- DE-A- 2 445 252
- DE-C- 3 507 452
- GB-A- 817 028
- US-A- 4 192 621

## Description

This invention relates to a method in accordance with the preamble of claim 1 for coupling together flanged members and to a coupling arrangement.

Different solutions are known for connecting together two flanged shafts or shaft parts. The solution shown in US-A-4192621 utilizes stud bolts and cooperating cylindrical sleeve elements, each stud bolt having a tapered part cooperating with a corresponding internal tapered surface of the associated sleeve element. The provision of the tapered surfaces enables the sleeve element to fasten tightly on the bores of the flanges and makes possible the transmission of large axial torque forces. In addition nuts are fastened to opposite ends of the bolts to greatly tension them, so that the solution is also well suited to instances where big bending movements may occur. However, this known solution is suitable only for the fastening of flanges provided with through-going bores and does not facilitate detachment of the bolts from the sleeve elements.

DE-A-3 507 452 discloses a coupling having elements providing a closed bore in which a tapered bolt and sleeve element are received. However this coupling does not have means for facilitating decoupling of the bolt and sleeve element.

An aim of the present invention is to create a novel solution for coupling together two flanged members, e.g. two flanged shaft parts, by means of a flange joint where the bore of one flange is closed at the bottom but which, however, uses tapered surfaces so that the shaft joint is thus especially suitable for the transmission of a large axial torque force. The invention is particularly, but not exclusively, directed to couplings to be applied to the crankshafts or camshafts of large diesel engines. A further aim of the invention is to provide a coupling which is constructionally simple and reliable and the assembly and disassembly of which is as simple, and takes up as little time, as possible.

According to one aspect of the present invention there is provided a method of coupling together flanged members as claimed in the ensuing claim 1.

With advantage the end piece may also be provided with means for preventing turning of the end piece relative to the adapting bolt.

The compressing of the adapting bolt tightly to the sleeve element can with advantage be accomplished hydraulically. In this case a separate cylindrical supporting sleeve is supported against the sleeve element and a piston member, hydraulically movable relative to the supporting sleeve, is screw-threadedly connected to the adapting bolt. Alternatively, the compressing can be accomplished mechanically by utilizing a tightening screw bolt screw-threadedly connected to the adapting bolt and a support piece arranged between the tightening screw bolt and the sleeve element and supported against the sleeve element.

According to another aspect of the present invention there is provided a joint arrangement as claimed in the ensuing claim 5.

The through-going hole in the adapting bolt is conveniently provided with threads, at least at the narrower end of the adapting bolt, for connection to axial force transmitting means.

In practice each adapting bolt is advantageously shorter than the combined thickness of the flanges. In addition the tapered surface of each bolt preferably extends over the entire length of the adapting bolt. Furthermore, the adapting bolt and associated sleeve element can, with advantage, be of substantially equal length. In this way the flange joint requires as little space as possible.

Conveniently the hole in the end piece may be provided with threads to enable connection thereto of a detaching tool for the joint. If the end piece is further provided with means, for example a pin, to prevent turning of the end piece relative to the adapting bolt, detachment of the joint can be accomplished relatively simply and quickly.

Embodiments of the invention will now be described, by way of example only, with particular reference to the accompanying drawings, in which:
Figure 1 is a schematic axial sectional view of part of a joint according to the invention, the joint being shown being assembled by hydraulic means;
Figure 2 is a schematic axial sectional view of part of the joint shown in Figure 1 but being shown being assembled mechanically; and
Figure 3 is a schematic sectional view illustrating disassembly of the joint shown in Figure 1.

In the drawings reference numerals 1 and 2 indicate end flanges of flanged shafts to be joined end to end. The flange 1 includes a number of through-going bores 1a (only one of which is shown in each figure) and the flange 2 has a corresponding number of bores 2a aligned with the bores 1a and each having a closed bottom. In the hole formed by the pair of aligned bores 1a and 2a, there is arranged a sleeve element 3 which encloses an adapting bolt 4. Within each pair of aligned bores, the sleeve element 3 and bolt 4 are fastened together by utilizing respective tapered counter surfaces 3a and 4a, the tapering of which surfaces has been exaggerated for clarity in the figures. The adapting bolt 4 has an axial, through-going hole 5, one end of which includes screw threads 5a. The narrower end of the tapered bolt 4 is positioned to the same side (i.e. to the left as shown in the figures) as the flange 1 of the two flanges.

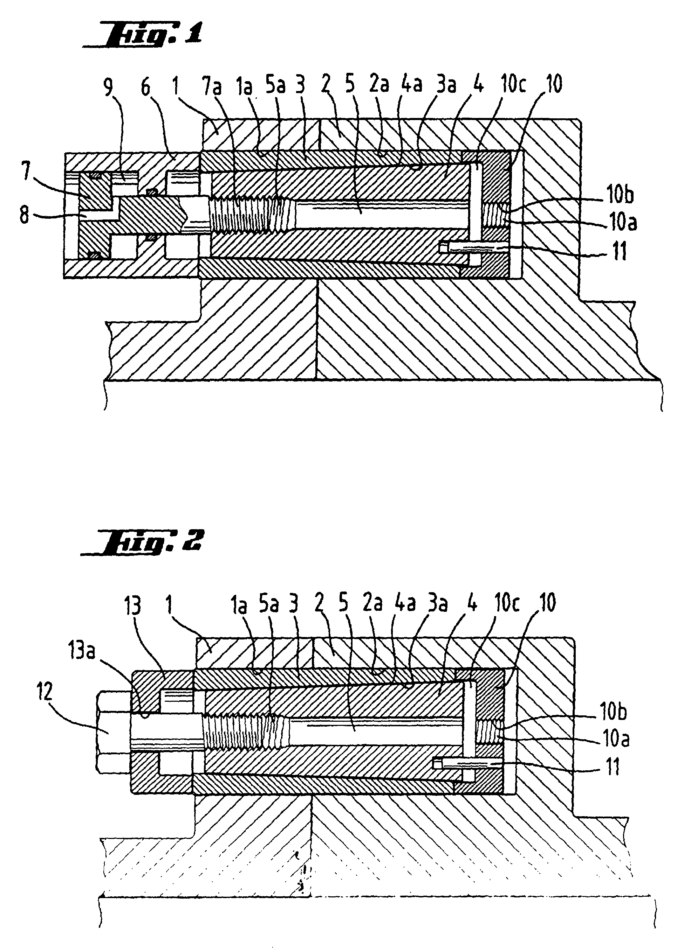

In the joint arrangement shown in Figure 1, hydraulic means are used to assemble the joint. In particular, the hydraulic means include a supporting sleeve 6 supported against the outer end of the sleeve element 3, and a piston member 7 which has a screw-threaded pin part 7a screw-threadedly connected to the screw threads 5a of the hole 5 in the adapting bolt 4. The piston member 7 includes a passage 8 for feeding hydraulic medium under pressure from a feeding device (not shown) into a chamber 9 between the piston member 7 and the supporting sleeve 6. As a result of feeding hydraulic medium into the chamber 9, the piston member 7 moves to the left (as viewed in Figure 1), at the same time pulling the adapting bolt 4 to the left with regard to the sleeve element 3, which remains in its original position because of its abutment against the supporting sleeve 6. Due to the tapered surfaces 3a and 4a, the axial movement to the left of the bolt 4 causes the sleeve element 3 to expand slightly in the radial direction providing a tight fastening or fit to the inner surfaces of the bores 1a and 2a. When a sufficient tightness has been attained, the hydraulic means can be removed, whereby the joint is completely assembled. Thus a screw bolt permanently assembled in the hole 5 is not necessarily required to ensure that the joint between the adapting bolt 4 and the sleeve element 3 remains in place.

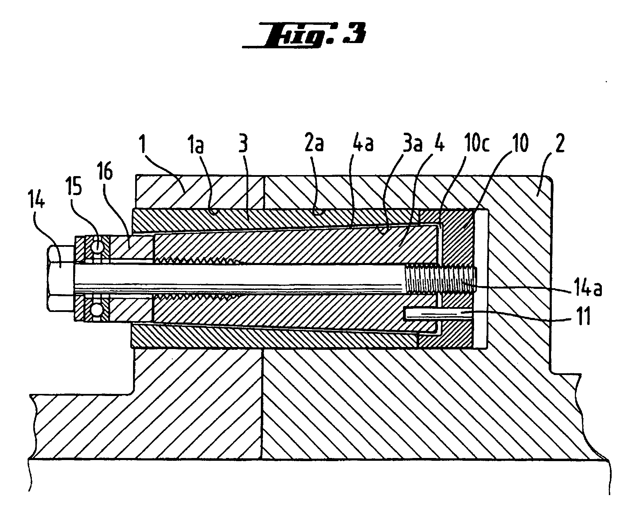

In Figure 2, the creation of a secure joint between the adapting bolt 4 and the sleeve element 3 is provided mechanically by using a tightening screw bolt 12. The bolt 12 is screw-threadedly connected co the screw threads 5a of the hole 5 in the adapting bolt 4 and a support piece 13 is positioned between the tightening screw bolt 12 and the sleeve element 3 and is supported against the sleeve element 3. The tightening screw bolt 12 passes through a hole 13a in the support piece 13, whereby the assembling of the joint is easily carried out by turning the tightening screw bolt 12. When a sufficient tightness has been attained, the parts 12 and 13 can be either left in place or removed according to need.

Figure 3 illustrates the joint being dissembled. To enable disassembly of the joint, there is provided a separate end piece 10 at the inner end of the sleeve element 3 in the bores 1a and 2a. The end piece 10 has a through-going hole 10a axially aligned with the hole 5 and has screw threads 10b. The end piece 10 is also provided with a cavity 10c which allows movement of the adapting bolt 4 axially to the right in Figure 3 to detach the adapting bolt 4 from the sleeve element 3. The means providing the actual movement of relocation comprises an arrangement including a screw bolt 14 having a pin part 14a which extends through the hole 5 for screw-threaded connection to the screw threads 10b of the hole 10a, a support piece 16 supported against the adapting bolt 4 and a thrust bearing 15 which makes it possible for the screw bolt 14 to be turned relative to the support piece 16. The arrangement further includes a pin 11 which prevents the end piece 10 from turning relative to the adapting bolt 4. The dissembling of the joint again takes place simply by turning the screw bolt 14, as a consequence of which the adapting bolt 4 moves relative to the sleeve element 3 (to the right in Figure 3) into the cavity 10c of the end piece 10.

As mentioned above, the drawings illustrate only one adapting bolt and cooperating sleeve element, but when applying the invention, several pairs of adapting bolts and sleeve elements are naturally used to fasten together the flanges of the shaft parts to be coupled.

Although the invention has been described with reference to the coupling of flanged shafts, it may also be used for joining other flanged members, such as flanges at the ends of pipes or conduits.

The invention is not limited to the embodiments shown but several modifications thereof are feasible, including variations which have features within the meaning of, features in any of the ensuing claims.

## Claims

1. A method of coupling together two flanged members, e.g. shafts, using tapered adapting bolts (4) and cooperating cylindrical sleeve elements (3) having internal tapered surfaces (3a) corresponding to the tapered adapting bolts (4), whereby the adapting bolts (4) and the sleeve elements (3) are arranged in aligned bores (1a,2a) in flanges (1,2) of the flanged members, one bore of each pair of aligned bores being a through-going bore (1a), the method including the steps of arranging each adapting bolt (4) within its associated sleeve element (3) and accommodating each cooperating bolt and sleeve element in the associated aligned bores (1a,2a) in the flanges, and, for each adapting bolt (4) and cooperating sleeve element (3), compressing them axially with respect to each other so that a pulling force is directed to the adapting bolt (4), **characterised in that** the compressing of each adapting bolt (4) and its cooperating sleeve element (3) is achieved by making use of a through-going hole (5) arranged at the position of the axis of the adapting bolt (4), the end surface of the sleeve element (3) being used as support for the counterforce required, and **in that** the method further includes the steps of arranging each adapting bolt (4) within its associated sleeve element (3) so that the narrower end of the tapered adapting bolt (4) is on the same side as that of the flange of the two flanges that has the through-going bore (1a) therein, and arranging a separate end piece (10), provided with a through-going hole (10a) located at the position of the axis of the sleeve element (3), at the end of the sleeve element (3), the end piece remaining adjacent the bottom of said other bore (2a), which has a closed bottom, and allowing movement of the adapting bolt (4) axially relative to the end piece (10) for enabling detachment of the adapting bolt (4) from the sleeve element (3).

2. A method according to claim 1, **characterised in that**, in step (a), the end piece (10) is additionally provided with means (11) for preventing turning of the end piece (10) relative to the adapting bolt (4).

3. A method according to claim 1 or 2, **characterised in that** said compressing is accomplished hydraulically, a separate cylindrical supporting sleeve (6) being supported against the sleeve element (3) and a piston member (7), screw-threadedly connected in the hole (5) of the adapting bolt (4), being hydraulically movable relative to the supporting sleeve (6).

4. A method according to claim 1 or 2, **characterised in that** said compressing is accomplished mechanically by means of a tightening screw bolt (12) screw-threadedly engaged in the hole (5) of the adapting bolt (4) and a support piece (13) arranged between the tightening screw bolt (12) and the sleeve element (3) and supported against the sleeve element (3).

5. A joint arrangement comprising two joint members each provided with a flange (1,2) with bores (1a, 2a) therein, the joint members being arranged flange to flange, the bores (1a,2a) in the two flanges being aligned with one bore (1a) of each aligned pair of bores being a through-going bore (1a), tapered adapting bolts (4) and cooperating cylindrical sleeve elements (3) having internal tapered surface (3a) corresponding to the tapered adapting bolts (4), whereby the adapting bolts (4) and the sleeve elements (3) are arranged in said aligned bores (1a,2a) in the flanges, wherein each adapting bolt (4) is arranged within its associated sleeve element (3), and each cooperating bolt and sleeve element pair is accommodated in its associated aligned bores (1a,2a) in the flanges, **characterised in that** the other bore (2a) of each pair of aligned bores is a closed bore, **in that** each adapting bolt (4) within its associated sleeve element (3) is so arranged that the narrower end of the tapered adapting bolt (4) is on the same side as that of the flange of the two flanges that has the through-going bore (1a) therein, **in that** each adapting bolt (4) is provided with an axial through-going hole (5) for providing for the mutual fastening of the adapting bolt (4) to its associated sleeve element (3) and for their fastening in the bores (1a,2a) of the flanges, and **in that**, for each pair of aligned bores (1a, 2a), there is, at the end of the sleeve element (3) adjacent the bottom of the closed bore (2a), a separate end piece (10) which is provided with a hole (10a) concentric with the through-going hole (5) in the adapting bolt (4) and which is arranged to allow movement of the adapting bolt (4) axially towards the bottom of the bores (1a,2a) to enable detachment of the adapting bolt (4) from the sleeve element (3).

6. An arrangement according to claim 5, **characterised in that** said hole (5) in the adapting bolt (4) is provided with threads (5a), at least at its narrower end, for connection to axial force transmitting means (7,7a,12).

7. An arrangement according to claim 5 or 6, **characterised in that** each adapting bolt (4) is shorter than the combined thickness of the two flanges (1,2) and **in that** the tapered surface (4a) of each adapting bolt extends over the entire length of the latter.

8. An arrangement according to any one of claims 5 to 7, **characterised in that** each adapting bolt (4) and its associated cooperating sleeve element (3) are of substantially equal length.

9. An arrangement according to any one of claims 5 to 8, **characterised in that** the hole (10a) in the end piece is provided with threads (10b) for connection thereto of a detaching tool (14,14a) for the joint.

## Patentansprüche

1. Verfahren zum Aneinanderkuppeln zweier mit Flansch versehener Glieder, zum Beispiel Wellen, unter Verwendung sich anpassender Kegelschrauben (4) und damit zusammenwirkender zylindrischer Hülsenelemente (3) mit sich verjüngenden Innenflächen (3a), die den sich anpassenden Kegelschrauben (4) entsprechen, wobei die sich anpassenden Schrauben (4) und die Hülsenelemente (3) in miteinander fluchtenden Bohrungen (1a, 2a) in Flanschen (1, 2) der mit Flanschen versehenen Glieder angeordnet sind, wobei eine Bohrung jedes Paars miteinander fluchtender Bohrungen eine Durchgangsbohrung (1a) ist, wobei das Verfahren folgende Schritte umfaßt: Anordnen jeder sich anpassenden Schraube (4) in dem ihr zugeordneten Hülsenelement (3) und Unterbringen jeder Schraube und jedes Hülsenelements, die zusammenwirken, in den zugehörigen miteinander fluchtenden Bohrungen (1a, 2a) in den Flanschen, und für jede sich anpassende Schraube (4) und jedes damit zusammenwirkende Hülsenelement (3) ihr axiales Aneinanderpressen, so daß eine Zugkraft auf die sich anpassende Schraube (4) ausgeübt wird, **dadurch gekennzeichnet, daß** das Aneinanderpressen jeder sich anpassenden Schraube (4) und des mit ihr zusammenwirkenden Hülsenelements (3) mit Hilfe eines in der Position der Achse der sich anpassenden Schraube (4) angeordneten Durchgangslochs (5) erreicht wird, wobei die Endfläche des Hülsenelements (3) als Stütze für die erforderliche Gegenkraft verwendet wird, und weiterhin mit den Schritten des derartigen Anordnens jeder sich anpassenden Schraube (4) in dem ihr zugeordneten Hülsenelement (3), daß sich das schmalere Ende der sich anpassenden Kegelschraube (4) auf der gleichen Seite wie das des Flanschs der beiden Flansche befindet, in dem die Durchgangsbohrung (1a) ausgebildet ist, und des Anordnens eines getrennten Endstücks (10), das mit einem Durchgangsloch (10a) versehen ist, das sich in der Position der Achse des Hülsenelements (3) am Ende des Hülsenelements (3) befindet, wobei das Endstück neben dem Grund der anderen Bohrung (2a) bleibt, deren unteres Ende geschlossen ist, und eine Bewegung der sich anpassenden Schraube (4) in Axialrichtung bezüglich des Endstücks (10) gestattet, um ein Lösen der sich anpassenden Schraube (4) von dem Hülsenelement (3) zu ermöglichen.

2. Verfahren nach Anspruch 1, **dadurch gekennzeichnet, daß** in Schritt (a) das Endstück (10) zusätzlich mit einem Mittel (11) zur Verhinderung des Drehens des Endstücks (10) bezüglich der sich anpassenden Schraube (4) versehen ist.

3. Verfahren nach Anspruch 1 oder 2, **dadurch gekennzeichnet, daß** das Aneinanderpressen hydraulisch erreicht wird, wobei eine getrennte zylindrische Stützhülse (6) gegen das Hülsenelement (3) gestützt wird, und ein in das Loch (5) der sich anpassenden Schraube (4) geschraubtes Kolbenglied (7) bezüglich der Stützhülse (6) hydraulisch beweglich ist.

4. Verfahren nach Anspruch 1 oder 2, **dadurch gekennzeichnet, daß** das Aneinanderpressen mechanisch erreicht wird, indem ein Festziehschraubbolzen (12) in das Loch (5) der sich anpassenden Schraube (4) geschraubt und ein Stützteil (13) zwischen dem Festziehschraubbolzen (12) und dem Hülsenelement (3) angeordnet und am Hülsenelement (3) abgestützt wird.

5. Verbindungsanordnung mit zwei miteinander verbundenen Gliedern, die jeweils mit einem Flansch (1, 2) mit darin ausgebildeten Bohrungen (1a, 2a) versehen sind, wobei die miteinander verbundenen Glieder Flansch an Flansch angeordnet sind und die Bohrungen (1a, 2a) in den beiden Flanschen miteinander fluchten, wobei eine Bohrung (1a) jedes fluchtenden Paars Bohrungen eine Durchgangsbohrung (1a) ist, wobei sich anpassende Kegelschrauben (4) und damit zusammenwirkende zylindrische Hülsenelemente (3) eine sich verjüngende Innenfläche (3a) aufweisen, die den sich anpassenden Kegelschrauben (4) entspricht, wobei die sich anpassenden Schrauben (4) und die Hülsenelemente (3) in den fluchtenden Bohrungen (1a, 2a) in den Flanschen angeordnet sind, wobei jede sich anpassende Schraube (4) in dem ihr zugeordneten Hülsenelement (3) angeordnet ist und jedes zusammenwirkende Schrauben- und Hülsenelementpaar in den ihm zugeordneten fluchtenden Bohrungen (1a, 2a) in den Flanschen untergebracht ist, **dadurch gekennzeichnet, daß** die andere Bohrung (2a) jedes Paars fluchtender Bohrungen eine geschlossene Bohrung ist, daß jede sich anpassende Schraube (4) in dem ihr zugeordneten Hülsenelement (3) so angeordnet ist, daß sich das schmalere Ende der sich anpassenden Kegelschraube (4) auf der gleichen Seite wie das des Flanschs der beiden Flansche befindet, in dem die Durchgangsbohrung (1a) ausgebildet ist, daß jede sich anpassende Schraube (4) mit einem axialen Durchgangsloch (5) versehen ist, um die gegenseitige Befestigung der sich anpassenden Schraube (4) an dem ihr zugeordneten Hülsenelement (3) und die Befestigung beider in den Bohrungen (1a, 2a) der Flansche zu gewährleisten, und daß für jedes Paar miteinander fluchtender Bohrungen (1a, 2a) am Ende des Hülsenelements (3) neben dem Grund der geschlossenen Bohrung (2a) ein getrenntes Endstück (10) vorgesehen ist, das mit einem konzentrisch zum Durchgangsloch (5) in der sich anpassenden Schraube (4) verlaufenden Loch (10a) versehen ist, das so angeordnet ist, daß es eine Bewegung der sich anpassenden Schraube (4) in Axialrichtung zum Grund der Bohrungen (1a 2a) hin gestattet, um ein Lösen der sich anpassenden Schraube (4) vom Hülsenelement (3) zu ermöglichen.

6. Anordnung nach Anspruch 5, **dadurch gekennzeichnet, daß** das Loch (5) in der sich anpassenden Schraube (4) zumindest an deren schmaleren Ende mit einem Gewinde (5a) zur Verbindung mit Axialkraftübertragungsmitteln (7, 7a, 12) versehen ist.

7. Anordnung nach Anspruch 5 oder 6, **dadurch gekennzeichnet, daß** jede sich anpassende Schraube (4) kürzer ist als die kombinierte Dicke der beiden Flansche (1, 2) und daß die sich verjüngende Fläche (4a) jeder sich anpassenden Schraube über deren ganze Länge verläuft.

8. Anordnung nach einem der Ansprüche 5 bis 7, **dadurch gekennzeichnet, daß** jede sich anpassende Schraube (4) und das ihr zugeordnete zusammenwirkende Hülsenelement (3) im wesentlichen die gleiche Länge aufweisen.

9. Anordnung nach einem der Ansprüche 5 bis 8, **dadurch gekennzeichnet, daß** das Loch (10a) im Endstück, mit einem Gewinde (10b) zur Verbindung eines Lösewerkzeugs (14, 14a) für die Verbindung versehen ist.

## Revendications

1. Méthode pour accoupler ensemble deux parties bridées, p. ex. des arbres, utilisant des boulons d'adaptation coniques (4) et des éléments de manchons cylindriques coopérants (3) ayant des surfaces intérieures coniques (3a) correspondant aux boulons d'adaptation coniques (4), en vertu de quoi les boulons d'adaptation (4) et les éléments de manchons (3) sont agencés dans des alésages alignés (1a, 2a) dans les brides (1, 2) des parties bridées, un alésage de chaque paire d'alésages alignés étant un alésage traversant (1a), la méthode comprenant les étapes consistant à agencer chaque boulon d'adaptation (4) dans son élément de manchon associé (3) et à loger chaque boulon coopérant et élément de manchon dans les alésages alignés associés (1a, 2a) dans les brides, et, pour chaque boulon d'adaptation (4) et élément de manchon coopérant (3), à les comprimer dans le sens axial l'un par rapport à l'autre de façon qu'une force de traction soit dirigée sur le boulon d'adaptation (4), **caractérisée en ce que** la compression de chaque boulon d'adaptation (4) et de son élément de manchon coopérant (3) est obtenue en utilisant un trou traversant (5) agencé à la position de l'axe du boulon d'adaptation (4), la surface d'extrémité de l'élément de manchon (3) étant utilisée en tant que support pour la force contraire requise, et **en ce que** la méthode comprend en outre les étapes consistant à agencer chaque boulon d'adaptation (4) dans son élément de manchon associé (3) de façon que l'extrémité la plus étroite du boulon d'adaptation conique (4) soit du même côté que celle des deux brides qui comporte l'alésage traversant (1a), et à agencer une pièce d'extrémité séparée (10), pourvue d'un trou traversant (10a) situé à la position de l'axe de l'élément de manchon (3), à l'extrémité de l'élément de manchon (3), la pièce d'extrémité demeurant adjacente au fond dudit autre alésage (2a), qui a un fond borgne, et permettant le mouvement du boulon d'adaptation (4) dans le sens axial par rapport à la pièce d'extrémité (10) pour permettre le détachement du boulon d'adaptation (4) de l'élément de manchon (3).

2. Méthode selon la revendication 1, **caractérisée en ce qu'**à l'étape (a), la pièce d'extrémité (10) est en outre pourvue de moyens (11) pour éviter la rotation de la pièce d'extrémité (10) par rapport au boulon d'adaptation (4).

3. Méthode selon la revendication 1 ou 2, **caractérisée en ce que** ladite compression est accomplie de façon hydraulique, un manchon cylindrique de support (6) étant supporté contre l'élément de manchon (3) et un ensemble piston (7) connecté par un filetage dans le trou (5) du boulon d'adaptation (4), pouvant être déplacé de façon hydraulique par rapport au manchon de support (6).

4. Méthode selon la revendication 1 ou 2, **caractérisée en ce que** ladite compression est accomplie de façon mécanique au moyen d'une vis de serrage (12) engagée par un filetage dans le trou (5) du boulon d'adaptation (4) et une pièce de support (13) agencée entre la vis de serrage (12) et l'élément de manchon (3) et supportée contre l'élément de manchon (3).

5. Agencement de joint comprenant deux ensembles de joints dotés chacun d'une bride (1, 2) comportant des alésages (1a, 2a), les ensembles de joints étant disposés bride contre bride, les alésages (1a, 2a) présents dans les deux brides étant alignés avec un alésage (1a) de chaque paire d'alésages alignés qui est un alésage traversant (1a), des boulons d'adaptation coniques (4) et des éléments de manchons cylindriques coopérants (3) ayant des surfaces coniques internes (3a) correspondant aux boulons d'adaptation coniques (4), en vertu de quoi les boulons d'adaptation (4) et les éléments de manchon (3) sont agencés dans lesdits alésages alignés (1a, 2a) dans les brides, dans lequel chaque boulon d'adaptation (4) est agencé dans son élément de manchon associé (3), et chaque paire de boulons et d'éléments de manchons coopérants est accueillie dans ses alésages alignés associés (1a, 2a) dans les brides, **caractérisé en ce que** l'autre alésage (2a) de chaque paire d'alésages alignés est un alésage borgne, **en ce que** chaque boulon d'adaptation (4) présent dans son élément de manchon associé (3) est disposé de façon que l'extrémité la plus étroite du boulon d'adaptation conique (4) soit sur le même côté que le côté de celle des deux brides qui comporte l'alésage traversant (1a), **en ce que** chaque boulon d'adaptation (4) est doté d'un trou axial traversant (5) pour fournir la fixation mutuelle du boulon d'adaptation (4) à son élément de manchon associé (3) et pour leur fixation dans les alésages (1a, 2a) des brides, et **en ce que**, pour chaque paire d'alésages alignés (1a, 2a), il y a, à l'extrémité de l'élément de manchon (3) adjacent au fond de l'alésage borgne (2a), une pièce d'extrémité séparée (10) qui est dotée d'un trou (10a) concentrique par rapport au trou traversant (5) dans le boulon d'adaptation (4) et qui est agencée pour permettre le mouvement du boulon d'adaptation (4) dans le sens axial vers le fond des alésages (1a, 2a) pour permettre le détachement du boulon d'adaptation (4) de l'élément de manchon (3).

6. Agencement selon la revendication 5, **caractérisé en ce que** ledit trou (5) dans le boulon d'adaptation (4) est pourvu de filetages (5a), du moins à son extrémité la plus étroite, pour la connexion aux moyens de transmission de la force axiale (7, 7a, 12).

7. Agencement selon la revendication 5 ou 6, **caractérisé en ce que** chaque boulon d'adaptation (4) est plus court que l'épaisseur combinée des deux brides (1, 2) et **en ce que** la surface conique (4a) de chaque boulon d'adaptation s'étend sur toute la longueur de ce dernier.

8. Agencement selon l'une quelconque des revendications 5 à 7, **caractérisé en ce que** chaque boulon d'adaptation (4) et son élément de manchon coopérant associé (3) sont de longueur substantiellement égale.

9. Agencement selon l'une quelconque des revendications 5 à 8, **caractérisé en ce que** le trou (10a) pratiqué dans la partie d'extrémité est pourvu de filetages (10b) pour la connexion à celui-ci d'un outil de démontage (14, 14a) pour le joint.
